# EUROPÄISCHE PATENTANMELDUNG

(11) **EP 2 950 174 A1**
(43) Veröffentlichungstag der Anmeldung: **02.12.2015**
(21) Anmeldenummer: 14169788.8
(22) Anmeldetag: 26.05.2014
(51) Int. Cl.: G05B 19/418, G05B 19/05, G05B 19/042, G05B 9/02, H01H 47/00

(54) **Verfahren und Vorrichtung zum sicheren Überprüfen eines Zustandes zweier Einrichtungen**

(71) Anmelder: SICK AG, 79183 Waldkirch (DE)
(72) Erfinder: Dold, Franz, 78120 Furtwangen (DE); Saumer, Markus, 77948 Friesenheim (DE); Kunz, Martin, 79117 Freiburg (DE)
(74) Vertreter: Ludewigt, Christoph

(57) **Zusammenfassung**

Um einen Zustand einer Automatisierungsanlage mittels einer einfachen sicheren Datenübertragung (L1, L2) sicher zu überprüfen, ist ein Verfahren zum sicheren Überprüfen eines Zustandes einer ersten (1) und einer zweiten (2) Einrichtung vorgesehen, die miteinander über eine erste (L1) und eine zweite (L2) Leitung verbunden sind, wobei die erste Einrichtung ein die erste Einrichtung (1) kennzeichnendes Signal (A) als ein Pulsmuster über die erste Leitung (L1) an die zweite Einrichtung (2) aussendet und über die zweite Leitung (L2) zurückerhält, und die zweite Einrichtung (2) ähnlicherweise ein zweites Signal (B) aussendet und zurückerhält, und wobei bei einer Änderung einer der beiden Signale ein Fehlerfall sicher festgestellt wird und die Einrichtungen sicher abgeschaltet werden. Die erste (1) bzw. die zweite Einrichtung (2) kann eine Information (Info 1 / Info 2) dem Signal (A/B) hinzufügen, so dass ihr Zustand sicher der anderen Einrichtung (2, 1) übermittelt wird (z.B.überwachte Tür offen / zu).

## Beschreibung

Die Erfindung betrifft ein Verfahren zum Überprüfen eines Zustandes zweier Einrichtungen gemäß dem Anspruch 1 und eine Vorrichtung gemäß dem Anspruch 9.

Herkömmlich werden Daten in einer Automatisierungsanlage bidirektional mittels Feldbusprotokollen zwischen den Anlageneinrichtungen ausgetauscht. Hierbei werden z.B. die spezifischen Zustände der Anlageneinrichtungen, wie z.B. Betriebsbereitschaft oder Verbindung, in Nachrichtenprotokollen erstellt und mittels spezifischer Schnittstellen übertragen.

Die Schnittstellen jeder Anlageneinrichtung müssen hardwaretechnisch derart ausgebildet sein, dass sie sowohl die Nachrichtenprotokolle erkennen, als auch verarbeiten können, um die Zustände der Anlageneinrichtungen aus den Nachrichtenprotokollen zu bestimmen und entsprechende Maßnahmen einzuleiten.

Bei einer sicheren Automatisierungsanlage sind zusätzlich entsprechende Normen für eine sichere Datenübertragung zu erfüllen. Hierzu werden herkömmlich für eine bidirektionale 1 Bit-Datenübertragung mindestens eine zweifache Verdrahtung zwischen zwei Anlageneinrichtungen, d.h. zwei Hin- und zwei Rückleitungen, vorgesehen. Die zweifache Verdrahtung erfordert wiederum bei den jeweiligen Anlageneinrichtungen vier sichere Ein- und vier sichere Ausgänge bzw. acht sichere Kommunikationsschnittstellen.

Um eine Dateninformation zwischen zwei Anlageneinrichtungen bzw. Teilnehmern zu übertragen, sind gegen mögliche Fehler entsprechende Sicherungsmaßnahmen erforderlich.

Solch eine sichere Datenübertragung, bei der die Zustände der Anlageneinrichtungen sicher kommuniziert werden, ist somit technisch aufwendig gestaltet und bewirkt hohe Entwicklungskosten und Produktionskosten der Automatisierungsanlage.

Es ist daher eine Aufgabe der Erfindung, ein Verfahren zum sicheren Überprüfen eines Zustandes zweier Einrichtungen derart zu verbessern, dass eine einfache Kommunikation des Zustandes möglich und ein Fehlerfall sicher erkennbar ist.

Die Aufgabe wird erfindungsgemäß gelöst durch ein Verfahren zum sicheren Überprüfen eines Zustandes einer ersten und einer zweiten Einrichtung, die miteinander über eine erste und eine zweite Leitung verbunden sind, wobei die erste Einrichtung ein die erste Einrichtung kennzeichnendes Signal über die erste Leitung an die zweite Einrichtung aussendet und das die erste Einrichtung kennzeichnende Signal über die zweite Leitung zurückerhält, und die zweite Einrichtung ein die zweite Einrichtung kennzeichnendes Signal über die zweite Leitung an die erste Einrichtung aussendet und das die zweite Einrichtung kennzeichnende Signal über die erste Leitung zurückerhält, und wobei bei einer Änderung einer der beiden Signale ein Fehlerfall festgestellt wird.

Dies hat den Vorteil, dass das die Einrichtung kennzeichnende Signal auf einfachste Art und Weise, insbesondere redundant und diversitär, durch die Anlage kommuniziert wird und dabei die Zustände der mit der aussendenden Einrichtung verbundenen Einrichtung und Leitungen mit überprüft werden.

Gemäß einem bevorzugten Ausführungsbeispiel werden die die Einrichtungen kennzeichnenden Signale als ein Pulsmuster ausgegeben und wird eine Pulsmustererkennung des Pulsmusters durchgeführt.

Gemäß einem weiteren bevorzugten Ausführungsbeispiel werden die die Einrichtungen kennzeichnenden Signale als ein Pulsmuster ausgegeben und wird eine Flankenerkennung des Pulsmusters durchgeführt.

Bei der Flankenerkennung des Pulsmusters wird bestimmt, ob das Signal einen low-oder high-Zustand aufweist. Hieraus kann ohne weitere aufwendige Verarbeitung abgeleitet werden, ob die Einrichtungen und die Leitungen sich in einwandfreiem Zustand befinden oder nicht.

Gemäß einem weiteren bevorzugten Ausführungsbeispiel schließt das die erste Einrichtung kennzeichnende Signal die zweite Einrichtung intern kurz und das die erste Einrichtung kennzeichnende Signal wird an die erste Einrichtung durchgeleitet.

Gemäß einem weiteren bevorzugten Ausführungsbeispiel schließt das die zweite Einrichtung kennzeichnende Signal die erste Einrichtung intern kurz und das die zweite Einrichtung kennzeichnende Signal wird an die zweite Einrichtung durchgeleitet.

Hierdurch ist ein einfacher Kommunikationsaufbau ohne aufwendige Busprotokolle und Schnittstellen erzielbar.

Gemäß einem weiteren bevorzugten Ausführungsbeispiel werden die die Einrichtungen kennzeichnenden Signale durch einen Vergleicher verglichen und bei einer Abweichung von einem ursprünglichen Zustand des Signals wird eine Abschaltung der Einrichtungen durchgeführt.

Gemäß einem weiteren bevorzugten Ausführungsbeispiel wird eine Information der jeweiligen Einrichtung den die Einrichtung kennzeichnenden Signalen mittels eines UND-Gatters beigefügt. Vorteilhafterweise löst die Information eine Abschaltung der Einrichtung aus. D.h. die Information der jeweiligen Einrichtung wird zusätzlich mit den die Einrichtung kennzeichnenden Signalen mit übertragen, wobei diese Information bei der Überprüfung der Zustände der jeweiligen Einrichtung unberücksichtigt bleibt und zum Auslösen einer Aktion dient.

Weiterhin wird die Aufgabe erfindungsgemäß gelöst durch eine Vorrichtung zum sicheren Durchführen eines oben genannten Verfahrens, mit einer ersten und einer zweiten Einrichtung, die miteinander über eine erste und eine zweite Leitung verbunden sind, wobei die erste und die zweite Einrichtung jeweils eine Kennungseinheit aufweisen, die zum Erzeugen eines die Einrichtung kennzeichnenden Signals und zum Senden des die Einrichtung kennzeichnenden Signals über die erste oder die zweite Leitung zu der verbundenen anderen Einrichtung vorgesehen ist, und wobei die jeweilige Kennungseinheit derart ausgebildet ist, zum Empfangen des ausgesendeten die Einrichtung kennzeichnenden Signals und zum Vergleichen der ausgesendeten und rückempfangenen die Einrichtung kennzeichnenden Signale, so dass ein Zustand der verbundenen anderen Einrichtung und der ersten und der zweiten Leitung sicher beurteilbar ist.

Gemäß einem bevorzugten Ausführungsbeispiel sind die erste und die zweite Einrichtung jeweils ein Sensor und eine Steuerung, eine Steuerung und ein Aktor, oder jeweils eine eigenständige Steuerung, die über die erste und die zweite Leitung miteinander verbunden sind.

Gemäß einem weiteren bevorzugten Ausführungsbeispiel besteht das die Einrichtung kennzeichnende Signal aus einem Pulsmuster und/oder einer Information über die jeweilige Einrichtung.

Gemäß einem weiteren bevorzugten Ausführungsbeispiel besteht die Kennungseinheit aus einer Steuereinheit mit einem Pulsmustergenerator, einem Vergleicher und einem UND-Gatter.

Gemäß einem weiteren bevorzugten Ausführungsbeispiel ist die Kennungseinheit ausgebildet, zum Durchführen einer Pulsmustererkennung und/oder einer Flankenerkennung des die Einrichtung kennzeichnenden Signals.

Gemäß einem weiteren bevorzugten Ausführungsbeispiel beinhaltet die Information über die Einrichtung eine Zustandsinformation der Einrichtung und/oder einen Befehl zur Abschaltung der Einrichtung. Hierdurch ist es vorteilhaft möglich, nicht nur den Zustand der Einrichtung und der Leitungen zu kommunizieren, sondern zugleich auf einfache Art und Weise eine Maßnahme auszulösen bzw. einzuleiten.

Das erfindungsgemäße Verfahren bzw. die erfindungsgemäße Vorrichtung kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben. Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1A: eine schematische Darstellung eines erfindungsgemäßen Ablaufs;
- Fig. 1B: die schematische Darstellung des erfindungsgemäßen Ablaufs; und
- Fig. 2: eine schematische Detail-Darstellung einer erfindungsgemäßen Kennungseinheit.

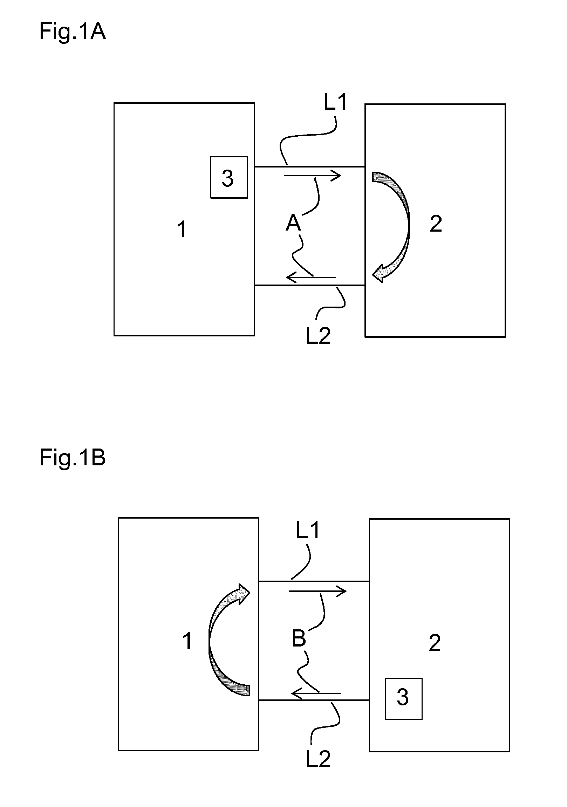

In den Figuren 1A und 1B ist ein schematischer Aufbau einer aus einer ersten und einer zweiten Einrichtung 1, 2 bestehenden Vorrichtung gezeigt, die miteinander über eine erste und eine zweite Leitung L1, L2 verbunden sind und eine Automatisierungsanlage bilden. Hierbei können die Einrichtungen 1, 2 aus einem sicheren Sensor und einer zugeordneten sicheren Steuerung, einer sicheren Steuerung und einem von der sicheren Steuerung angetriebenen Aktor, oder zwei eigenständigen Steuerungen, vorzugsweise Sicherheitssteuerungen, bestehen.

Die erste und die zweite Einrichtung 1, 2 weisen jeweils eine Kennungseinheit 3 auf, die zum Erzeugen eines die Einrichtung 1, 2 kennzeichnenden Signals A, B und zum Senden des die Einrichtung 1, 2 kennzeichnenden Signals A, B über die erste und die zweite Leitung L1, L2 zu der verbundenen anderen Einrichtung 2, 1 vorgesehen ist.

Wie in Figur 1A gezeigt, erzeugt erfindungsgemäß die Kennungseinheit 3 der ersten Einrichtung 1 ein die erste Einrichtung 1 kennzeichnendes Signal A und sendet dieses über die erste Leitung L1 an die zweite Einrichtung 2. Das die erste Einrichtung 1 kennzeichnende Signal A schließt in bevorzugter Weise die zweite Einrichtung 2 intern kurz, d.h. es löst intern in der zweiten Einrichtung 2 einen Testpuls aus, so dass das die erste Einrichtung 1 kennzeichnende Signal A, in bevorzugter Weise zusammen mit dem als zusätzliche Information dienenden Testpuls, an die erste Einrichtung 1 über die zweite Leitung L2 durchgeleitet werden kann.

Die Kennungseinheit 3 der ersten Einrichtung 1 erhält über die zweite Leitung L2 das ausgesendete, die erste Einrichtung kennzeichnende Signal A zurück und ermittelt daraus, insbesondere in bevorzugter Weise zusammen mit dem Testpuls, einen Zustand der zweiten Einrichtung 2 und die verbundenen ersten und zweiten Leitungen L1, L2.

Gemäß der Figur 1B erzeugt die Kennungseinheit 3 der zweiten Einrichtung 2 erfindungsgemäß ebenfalls ein die zweite Einrichtung 2 kennzeichnendes Signal B und sendet dieses über die zweite Leitung L2 an die erste Einrichtung 1. Das die zweite Einrichtung 2 kennzeichnende Signal B schließt ebenfalls in bevorzugter Weise auch die erste Einrichtung 1 intern kurz, d.h. es löst intern in der ersten Einrichtung ebenfalls einen Testpuls aus, so dass das die zweite Einrichtung 2 kennzeichnende Signal B, in bevorzugter Weise zusammen mit dem als zusätzliche Information dienenden Testpuls, an die zweite Einrichtung über die erste Leitung L1 durchgeleitet werden kann.

Hierbei werden die Signale A, B als Pulsmuster ausgegeben, wobei in vorteilhafter Weise die Signale A, B unabhängig voneinander erzeugt und divers sein können. Ferner brauchen die Signale A, B nicht zueinander synchronisiert sein.

Somit bilden die die Einrichtungen 1, 2 kennzeichnenden Signale A, B redundante und diversitäre Signale, die über zwei unterschiedliche Leitungen L1, L2 zwischen den Einrichtungen 1, 2 kommuniziert werden. Dadurch ist eine sichere Überprüfung bzw. Datenübertragung gemäß der Norm IEC 61131 trotz reduzierter Leitungsanzahl und Ein- und Ausgänge der Einrichtungen 1, 2 gewährleistet.

Bei der Ermittlung des Zustandes der ersten bzw. der zweiten Einrichtung 1, 2 kann eine Pulsmusterkennung oder eine Flankenerkennung des Pulsmusters durchgeführt werden.

Die Erkennungseinheit 3 bestimmt bei der Flankenerkennung des Pulsmusters, ob das die Einrichtung 1, 2 kennzeichnende Signal A, B einen low- oder high-Zustand aufweist. Hieraus kann ohne weitere aufwendige Verarbeitung abgeleitet werden, ob die erste und/oder die zweite Einrichtung 1, 2 und die Leitungen L1, L2 sich in einwandfreiem Zustand befinden oder nicht.

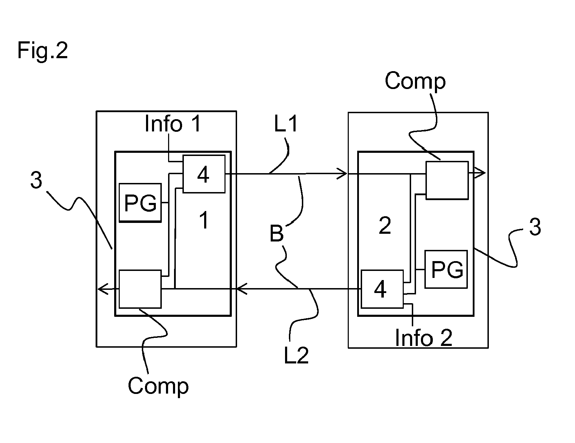

Die Figur 2 zeigt die oben beschriebene schematische Darstellung eines erfindungsgemäßen Aufbaus der Automatisierungsanlage, wobei die Kennungseinheit 3 detaillierter dargestellt ist.

Die Kennungseinheit 3 besteht in bevorzugter Weise aus einer Steuereinheit mit einem Pulsmustergenerator PG, einem Vergleicher Comp und einem UND-Gatter 4, wobei die Kennungseinheit 3 ferner ausgebildet ist, zum Durchführen der Pulsmustererkennung und/oder der Flankenerkennung des die erste oder die zweite Einrichtung 1, 2 kennzeichnenden Signals A, B.

Der Pulsmustergenerator PG erzeugt in vorteilhafter Weise das die erste oder die zweite Einrichtung 1, 2 kennzeichnende Signal A, B und führt dieses dem UND-Gatter 4 zu, so dass das erzeugte Pulsmuster in Form des Signals A, B an die jeweilige andere Einrichtung 2, 1 versendet werden kann.

Hierbei kann mittels des UND-Gatters 4 eine zusätzliche Information Info 1, Info 2 betreffend der jeweiligen Einrichtung 1, 2 zu dem Pulsmuster bzw. dem die Einrichtung 1, 2 kennzeichnenden Signal A, B hinzugefügt werden. Die Information Info 1, Info 2 über die Einrichtung 1, 2 beinhaltet eine Zustandsinformation der Einrichtung 1, 2 und/oder einen Befehl zur Abschaltung der Einrichtung 1, 2, so dass bei einer Ermittlung eines Fehlerfalls, z.B. Kurzschluss in einer der beiden Leitungen L1, L2, die beiden Einrichtungen 1, 2 gemeinsam sicher abgeschaltet werden können.

Die Erkennung des Fehlerfalls wird durch den Vergleicher Comp erreicht, der die die Einrichtungen 1, 2 kennzeichnenden Signale A, B bzw. die Pulsmuster mit den ursprünglichen ausgesendeten Signalen A, B bzw. Pulsmuster des Pulsmustergenerators PG vergleicht. Bei einer Änderung der Signale A, B bzw. der Pulsmuster wird ein Fehlerfall der Automatisierungsanlage sicher festgestellt.

Im Falle eines fehlerfreien Zustands der Einrichtungen 1, 2, d.h. keine Änderung der die Einrichtungen 1, 2 kennzeichnenden Signale A, B bzw. Erkennung des korrekten Pulsmusters der jeweiligen Einrichtungen 1, 2, leitet der Vergleicher Comp in bevorzugter Weise die zusätzliche Information Info 1, Info 2 weiter und/oder führt einen als Information Info 1, Info 2 kommunizierten Befehl durch.

Somit überprüfen erfindungsgemäß der Pulsmustergenerator PG und der Vergleicher Comp jeweils die Leitungen L1, L2 bzw. Übertragungsstrecken, so dass im Falle eines Fehlers auf der Leitung L1, L2 beide den Fehlerfall sicher erkennen.

Das erfindungsgemäße Verfahren bzw. die erfindungsgemäße Vorrichtung hat den Vorteil gegenüber einer herkömmlichen Sicherheitsvorrichtung, die für eine sichere bidirektionale 1 Bit-Datenübertragung mittels Busprotokoll zwischen zwei Einrichtungen 1, 2 vier Leitungen, vier Sicherheitseingänge und vier Sicherheitsausgänge benötigt, dass lediglich jeweils ein Sicherheitseingang und ein Sicherheitsausgang für die erste und die zweite Leitung L1, L2 vorgesehen werden müssen.

Dadurch kann die Hälfte der Verdrahtung bzw. können die Kosten auf die Hälfte der ursprünglichen Kosten reduziert werden.

Wird das erfindungsgemäße Verfahren auf eine Verschaltung zwischen einer Sicherheitssteuerung als erste Einrichtung 1 und einem Aktor als zweite Einrichtung 2 angewendet, so kann das die Sicherheitssteuerung als erste Einrichtung 1 kennzeichnende Signal A ein Abschaltsignal als zusätzliche Information Info 1 an dem Aktor als zweite Einrichtung 2 kommuniziert werden. Das den Aktor als zweite Einrichtung 2 kennzeichnende Signal B kann eine Rückmeldung über eine erfolgreiche Abschaltung als zusätzliche Information Info 2 an die Sicherheitssteuerung als erste Einrichtung 1 wiederum kommunizieren.

Gemäß einem weiteren bevorzugten Anwendungsbeispiel des erfindungsgemäßen Verfahrens bei einer Verschaltung zwischen einem Sicherheitsschalter im Sinne eines Sensors als zweite Einrichtung 2 und einer Sicherheitssteuerung als erste Einrichtung 1 kann der Sicherheitsschalter als zweite Einrichtung 2 mit dem den Sicherheitsschalter kennzeichnenden Signal B einen Zustand z.B. einer überwachten Tür (offen/zu) zu der Sicherheitssteuerung als erste Einrichtung 1 übermitteln. Im Gegensatz dazu kann die Sicherheitssteuerung als erste Einrichtung 1 mit dem der Sicherheitssteuerung kennzeichnenden Signal A einen Zustand in Form aktiv/deaktiv zum Sicherheitsschalter als zweite Einrichtung 2 kommunizieren. Vorteilhafterweise können diese Zustände als zusätzliche Information Info 1, Info 2 zu den kennzeichnenden Signalen A, B kommuniziert werden.

Hierdurch wird das Prinzip der redundanten und diversitären Signale A, B bei einer sicheren Kommunikation zwischen zwei Einrichtungen 1, 2 bewahrt.

Die Kommunikation ist somit vereinfacht und sicher durchführbar, da die die Einrichtungen 1, 2 kennzeichnenden Signale A, B voneinander unterscheiden (diversitär) und über unterschiedliche Leitungen L1, L2 zu bevorzugten unterschiedlichen Zeitpunkten (redundant) kommuniziert werden.

### Bezugszeichenliste

- 1, 2: Einrichtung
- 3: Erkennungseinheit
- 4: UND-Gatter
- L1: Leitung 1
- L2: Leitung 2
- A, B: Signal
- Comp: Vergleicher
- Info 1, Info 2: Information bzw. Befehl
- PG: Pulsmustergenerator

## Patentansprüche

1. Verfahren zum sicheren Überprüfen eines Zustandes einer ersten und einer zweiten Einrichtung (1, 2), die miteinander über eine erste und eine zweite Leitung (L1, L2) verbunden sind, wobei die erste Einrichtung (1) ein die erste Einrichtung (1) kennzeichnendes Signal (A) über die erste Leitung (L1) an die zweite Einrichtung (2) aussendet und das die erste Einrichtung (1) kennzeichnende Signal (A) über die zweite Leitung (L2) zurückerhält, und die zweite Einrichtung (2) ein die zweite Einrichtung (2) kennzeichnendes Signal (B) über die zweite Leitung (L2) an die erste Einrichtung (1) aussendet und das die zweite Einrichtung (2) kennzeichnende Signal (B) über die erste Leitung (L1) zurückerhält, und wobei bei einer Änderung einer der beiden Signale (A, B) ein Fehlerfall sicher festgestellt wird.

2. Verfahren nach Anspruch 1, wobei die die Einrichtungen (1, 2) kennzeichnenden Signale (A, B) als ein Pulsmuster ausgegeben werden und eine Pulsmustererkennung durchgeführt wird.

3. Verfahren nach Anspruch 1, wobei die die Einrichtungen (1, 2) kennzeichnenden Signale (A, B) als ein Pulsmuster ausgegeben werden und eine Flankenerkennung des Pulsmusters durchgeführt wird.

4. Verfahren nach einem der vorhergehenden Ansprüche, wobei das die erste Einrichtung (1) kennzeichnende Signal (A) die zweite Einrichtung (2) intern kurzschließt und an die erste Einrichtung (1) durchgeleitet wird.

5. Verfahren nach einem der vorhergehenden Ansprüche, wobei das die zweite Einrichtung (2) kennzeichnende Signal (B) die erste Einrichtung (1) intern kurzschließt und an die zweite Einrichtung (2) durchgeleitet wird.

6. Verfahren nach einem der vorhergehenden Ansprüche, wobei die die Einrichtungen (1, 2) kennzeichnenden Signale (A, B) durch einen Vergleicher (Comp) verglichen werden und bei einer Abweichung von einem ursprünglichen Zustand des Signals (A, B) eine sichere Abschaltung der Einrichtungen (1, 2) durchgeführt wird.

7. Verfahren nach einem der vorhergehenden Ansprüche, wobei eine Information (Info 1, Info 2) der jeweiligen Einrichtung (1, 2) den die Einrichtung (1, 2) kennzeichnenden Signalen (A, B) mittels eines UND-Gatters (4) beigefügt wird.

8. Verfahren nach Anspruch 7, wobei die Information (Info 1, Info 2) eine Abschaltung der Einrichtung (1, 2) auslöst.

9. Vorrichtung zum Durchführen eines Verfahrens nach einem der vorhergehenden Ansprüche 1 bis 8, mit einer ersten und einer zweiten Einrichtung (1, 2), die miteinander über eine erste und eine zweite Leitung (L1, L2) verbunden sind, wobei die erste und die zweite Einrichtung (1, 2) jeweils eine Kennungseinheit (3) aufweisen, die zum Erzeugen eines die Einrichtung (1, 2) kennzeichnenden Signals (A, B) und zum Senden des die Einrichtung (1, 2) kennzeichnenden Signals (A, B) über die erste oder die zweite Leitung (L1, L2) zu der verbundenen anderen Einrichtung (2, 1) vorgesehen ist, und wobei die jeweilige Kennungseinheit (3) derart ausgebildet ist, zum Empfangen des ausgesendeten die Einrichtung (1, 2) kennzeichnenden Signals (A, B) und zum Vergleichen der ausgesendeten und rückempfangenen die Einrichtung (1, 2) kennzeichnenden Signale (A, B), so dass ein Zustand der verbundenen anderen Einrichtung (2, 1) und der ersten und der zweiten Leitung (L1, L2) sicher beurteilbar ist.

10. Vorrichtung nach Anspruch 9, wobei die erste und die zweite Einrichtung (1, 2) jeweils ein Sensor und eine Steuerung, eine Steuerung und ein Aktor, oder jeweils eine eigenständige Steuerung sind, die über die erste und die zweite Leitung (L1, L2) miteinander verbunden sind.

11. Vorrichtung nach Anspruch 9 oder 10, wobei das die Einrichtung (1, 2) kennzeichnende Signal (A, B) aus einem Pulsmuster und/oder einer Information (Info 1, Info 2) über die jeweilige Einrichtung (1, 2) besteht.

12. Vorrichtung nach einem der vorhergehenden Ansprüche 9 bis 11, wobei die Kennungseinheit (3) aus einer Steuereinheit mit einem Pulsmustergenerator (PG), einem Vergleicher (Comp) und einem UND-Gatter (4) besteht.

13. Vorrichtung nach einem der vorherigen Ansprüche 9 bis 12, wobei die Kennungseinheit (3) ausgebildet ist, zum Durchführen einer Pulsmustererkennung und/oder einer Flankenerkennung des die Einrichtung (1, 2) kennzeichnenden Signals (A, B).

14. Vorrichtung nach einem der vorhergehenden Ansprüche 11 bis 13, wobei die Information (Info 1, Info 2) über die Einrichtung (1, 2) eine Zustandsinformation der Einrichtung (1, 2) und/oder einen Befehl zur Abschaltung der Einrichtung (1, 2) beinhaltet.

## Geänderte Patentansprüche

### Geänderte Patentansprüche gemäss Regel 137(2) EPÜ.

1. Verfahren zum sicheren Überprüfen eines Zustandes einer ersten und einer zweiten Einrichtung (1, 2), die miteinander über eine erste und eine zweite Leitung (L1, L2) verbunden sind, wobei die erste Einrichtung (1) ein die erste Einrichtung (1) kennzeichnendes Signal (A) über die erste Leitung (L1) an die zweite Einrichtung (2) aussendet, **dadurch gekennzeichnet, dass** die erste Einrichtung (1) das die erste Einrichtung (1) kennzeichnende Signal (A) über die zweite Leitung (L2) zurückerhält, und die zweite Einrichtung (2) ein die zweite Einrichtung (2) kennzeichnendes Signal (B) über die zweite Leitung (L2) an die erste Einrichtung (1) aussendet und das die zweite Einrichtung (2) kennzeichnende Signal (B) über die erste Leitung (L1) zurückerhält, und **dass** bei einer Änderung eines der beiden Signale (A, B) ein Fehlerfall sicher festgestellt wird.

2. Verfahren nach Anspruch 1, **dadurch gekennzeichnet, dass** die die Einrichtungen (1, 2) kennzeichnenden Signale (A, B) als ein Pulsmuster ausgegeben werden und eine Pulsmustererkennung durchgeführt wird.

3. Verfahren nach Anspruch 1, **dadurch gekennzeichnet, dass** die die Einrichtungen (1, 2) kennzeichnenden Signale (A, B) als ein Pulsmuster ausgegeben werden und eine Flankenerkennung des Pulsmusters durchgeführt wird.

4. Verfahren nach einem der vorhergehenden Ansprüche, **dadurch gekennzeichnet, dass** das die erste Einrichtung (1) kennzeichnende Signal (A) die zweite Einrichtung (2) intern kurzschließt und an die erste Einrichtung (1) durchgeleitet wird, wobei das interne Kurzschließen einen Testpuls in der zweiten Einrichtung (2) auslöst.

5. Verfahren nach einem der vorhergehenden Ansprüche, **dadurch gekennzeichnet, dass** das die zweite Einrichtung (2) kennzeichnende Signal (B) die erste Einrichtung (1) intern kurzschließt und an die zweite Einrichtung (2) durchgeleitet wird, wobei das interne Kurzschließen einen Testpuls in der ersten Einrichtung (1) auslöst.

6. Verfahren nach einem der vorhergehenden Ansprüche, **dadurch gekennzeichnet, dass** die die Einrichtungen (1, 2) kennzeichnenden Signale (A, B) durch einen Vergleicher (Comp) verglichen werden und bei einer Abweichung von einem ursprünglichen Zustand des Signals (A, B) eine sichere Abschaltung der Einrichtungen (1, 2) durchgeführt wird.

7. Verfahren nach einem der vorhergehenden Ansprüche, **dadurch gekennzeichnet, dass** eine Information (Info 1, Info 2) der jeweiligen Einrichtung (1, 2) den die Einrichtung (1, 2) kennzeichnenden Signalen (A, B) mittels eines UND-Gatters (4) beigefügt wird.

8. Verfahren nach Anspruch 7, **dadurch gekennzeichnet, dass** die Information (Info 1, Info 2) eine Abschaltung der Einrichtung (1, 2) auslöst.

9. Vorrichtung zum Durchführen eines Verfahrens nach einem der vorhergehenden Ansprüche 1 bis 8, mit einer ersten und einer zweiten Einrichtung (1, 2), die miteinander über eine erste und eine zweite Leitung (L1, L2) verbunden sind, wobei die erste und die zweite Einrichtung (1, 2) jeweils eine Kennungseinheit (3) aufweisen, die zum Erzeugen eines die Einrichtung (1, 2) kennzeichnenden Signals (A, B) und zum Senden des die Einrichtung (1, 2) kennzeichnenden Signals (A, B) über die erste oder die zweite Leitung (L1, L2) zu der verbundenen anderen Einrichtung (2, 1) vorgesehen ist, und wobei die jeweilige Kennungseinheit (3) derart ausgebildet ist, zum Empfangen des ausgesendeten die Einrichtung (1, 2) kennzeichnenden Signals (A, B) und zum Vergleichen der ausgesendeten und rückempfangenen die Einrichtung (1, 2) kennzeichnenden Signale (A, B), so dass ein Zustand der verbundenen anderen Einrichtung (2, 1) und der ersten und der zweiten Leitung (L1, L2) sicher beurteilbar ist.

10. Vorrichtung nach Anspruch 9, wobei die erste und die zweite Einrichtung (1, 2) jeweils ein Sensor und eine Steuerung, eine Steuerung und ein Aktor, oder jeweils eine eigenständige Steuerung sind, die über die erste und die zweite Leitung (L1, L2) miteinander verbunden sind.

11. Vorrichtung nach Anspruch 9 oder 10, wobei das die Einrichtung (1, 2) kennzeichnende Signal (A, B) aus einem Pulsmuster und/oder einer Information (Info 1, Info 2) über die jeweilige Einrichtung (1, 2) besteht.

12. Vorrichtung nach einem der vorhergehenden Ansprüche 9 bis 11, wobei die Kennungseinheit (3) aus einer Steuereinheit mit einem Pulsmustergenerator (PG), einem Vergleicher (Comp) und einem UND-Gatter (4) besteht.

13. Vorrichtung nach Anspruch 12, wobei die Kennungseinheit (3) ausgebildet ist, zum Durchführen einer Pulsmustererkennung und/oder einer Flankenerkennung des die Einrichtung (1, 2) kennzeichnenden Signals (A, B).

14. Vorrichtung nach einem der vorhergehenden Ansprüche 11 bis 13, wobei die Information (Info 1, Info 2) über die Einrichtung (1, 2) eine Zustandsinformation der Einrichtung (1, 2) und/oder einen Befehl zur Abschaltung der Einrichtung (1, 2) beinhaltet.
